# EUROPEAN PATENT SPECIFICATION

(11) **EP 2 989 142 B1**
(45) Date of publication and mention of the grant of the patent: **02.10.2019**
(21) Application number: 14719027.6
(22) Date of filing: 24.04.2014
(51) Int. Cl.: C08G 59/50, C08L 63/00, C08L 75/04

(54) **CEMENT-FREE OR CEMENT-REDUCED LOW DUST HYBRID FLOORING COMPOSITIONS**
ZEMENTFREIE ODER ZEMENTREDUZIERTE STAUBARME HYBRIDESTRICHZUSAMMENSETZUNGEN
COMPOSITIONS DE REVÊTEMENT DE SOL HYBRIDES À FAIBLE TENEUR EN POUSSIÈRE ET SANS CIMENT OU COMPORTANT UNE QUANTITÉ RÉDUITE DE CIMENT

(30) Priority: 26.04.2013 EP 13165613
(43) Date of publication of application: 02.03.2016
(73) Proprietor: Sika Technology AG, 6340 Baar (CH)
(72) Inventor: GIMENO SANTOS, Patricia, 70186 Stuttgart (DE); KADDATZ, Carola, 71546 Aspach (DE); GRÖTZINGER, Jochen, 73525 Schwäbisch Gmünd (DE); MÄDER, Urs, CH-8500 Frauenfeld (CH)
(74) Representative: Sika Patent Attorneys
(86) International application number: PCT/EP2014/058379
(87) International publication number: WO 2014/174033

(56) References cited:
- WO-A1-96/06057
- GB-A- 2 480 686
- JP-A- H10 202 229
- KR-A-020050 008 417
- US-A1- 2008 006 383
- DATABASE WPI Week 201003 Thomson Scientific, London, GB; AN 2009-R19854 XP002714567, & KR 2009 0115085 A (JUNGMAC IND R&D LTD) 4 November 2009 (2009-11-04)
- DATABASE WPI Week 200110 Thomson Scientific, London, GB; AN 2001-084551 XP002714568, & JP 2000 302514 A (ASAHI GLASS CO LTD) 31 October 2000 (2000-10-31)

## Description

### Technical field

The invention relates to a multi-component composition suitable for the preparation of a flooring or coating or as a grout, a method for the manufacture of the flooring or coating with the multi-component composition and the flooring or coating obtainable by the method.

### Background of the invention

Cement is a mass product and mainly used for the preparation of concretes or mortars for the building industry. The production of cement is very energy-intensive and emits high levels of CO₂. For instance, almost 0.8 tons of CO₂ are emitted during the production of each ton of Portland cement. Thus, materials with an improved carbon footprint which are suitable as a substitute for cement are of enormous interest in view of reduction of global CO₂ emission.

A further problem is dust formation during production and use of cement. It is usually necessary to spray mineral oil on the cement in order to alleviate this problem which causes loss of time during production. Moreover, incorporation of mineral oil reduces workability of the product and has a negative influence on the product surface since blister, pinholes or crater formation may occur. This necessitates additional incorporation of antifoaming additives.

The pulp and paper industry in Europe generates 11 million tons of solid waste each year. Manufacturing processes to produce new paper from the deinking of recycled paper account for 70% of these waste products. The recycling paper is transformed into an aqueous suspension of fibers, while inappropriate materials are eliminated in different cleaning processes. Following this initial treatment, the resultant sludge is subjected to deinking in a froth floatation process, which produces waste known as deinked sludge or paper sludge.

Paper sludge has a high humidity content of about 50% and is roughly composed of about 25% of organic material with their origin in paper fibers and about 25% of mineral loads such as calcium carbonate, kaolin, talc and titanium oxide. In addition, various paper manufacturing processes include water treatment plants generating paper sludge of similar composition but higher humidity content as waste. Paper sludge is a potential source for the recovery of saturated biomass and mineral constituents. Possible applications for agriculture purposes, composting or in ceramic and cement industries have been studied.

WO 96/06057 describes a process wherein paper waste such as paper sludge is subjected to a calcination process to obtain a material having puzzolanic properties. Also described is a method for the preparation of cement where a part of conventional cement starting materials are replaced by the calcined paper waste.

There have been several studies with respect to the use of calcined paper waste in cement products such as concrete or mortar. However, it has been found that only relatively small amounts of cement can be replaced by such heat treated paper waste without significantly affecting the desired properties of the cement products. In the case of mortar product, the maximum is a 10% replacement of cement by calcined paper waste since otherwise the properties such as workability or compressive strength of the obtained products are reduced too much.

A specific type of cement products are so called polymer cement concrete (PCC) systems. These systems are hybrid cementitious systems in which a part of the cement binder is replaced by an organic polymer. The organic polymer can be added in form of a polymer latex dispersion or in form of curable monomers or prepolymers in combination with a suitable hardener component.

Products based on curable starting materials such as polyurethane cementitious hybrid systems in which the organic binder is based on polyols and an isocyanate hardener and epoxy cementitious hybrid systems in which the organic binder is based on epoxy resins and an amine hardener are known and used in a plurality of applications. The latter systems are conventionally known as epoxy cement concrete (ECC) systems.

Common PCC systems also suffer from dust formation by cement. The current approach to avoid dust is to use oil such as mineral oil, paraffin oil and organic oil, or celluluose fibers when the cement containing component is added to the polymer latex containing component or to the mixture of curable organic binder and hardener.

JP H10-202229 A relates to a formed product wherein a dried sludge powder obtained by calcining dried paper-making waste sludge at a temperature of 900-1300°C is mixed with a phenol resin emulsion, a lubricating material and a filler selected from clay and sand, and the mixture obtained is subjected to a heat treatment at 150-250°C.

US 2008/006383 A1 discloses a pulp sludge composition for producing building materials containing a pulp sludge ash, an aqueous modified sodium silicate having an acidic group and a polymer emulsion.

KR 1020050008417 A relates to a composition for construction comprising 50-65 wt.% pulp sludge incineration ash, 10-25 wt.% waste gypsum, 25-45 wt.% water and a polymer emulsion.

KR 2009 0115085 A describes a hydraulic hardened complex product comprising paper-making sludge incineration ash, gypsum, organic emulsion and reinforcing fibers.

GB 2480686 A is concerned with a construction product, comprising a mixture of sulphur polymer cement and an aggregate material.

JP 2000-302514 A relates to a polyurethane cement composition comprising cement, a compound containing isocyanate groups, compounds containing active hydrogen carrying groups, water and organic acids. A castor oil dispersion is used in the example.

### Summary of the invention

The object of the present invention is to provide compositions suitable as inorganic organic hybrid binder compositions or mortars, in particular for flooring applications, to overcome the problems discussed above. In particular, the object is to provide compositions having reduced cement content while substantially maintaining the properties at least to a large extent compared to the conventional cement products. The system should have an improved carbon footprint compared to conventional cement products. Moreover, dust exposure should be minimized so that means for preventing dust formation such as use of oil or cellulose fibers is not necessary.

Surprisingly, this object could be achieved by using calcined paper sludge as a partial or complete substitute for cement in specific polymer cement hybrid systems. It was very astonishing that it is possible to replace a large amount and even up to 100% of cement and lime by calcined paper sludge, i.e. the systems can be cement-free or can have a reduced cement content. Accordingly, the present invention relates to a multi-component composition comprising a solid component (A) comprising calcined paper sludge and one or more aggregates, and a binder component (B) comprising an organic binder selected from one or more polyols, or one or more epoxy resins and, if the organic binder is one or more polyols or one or more epoxy resins, a hardener component (C) comprising an isocyanate hardener for the polyol or an amine hardener for epoxy resin, wherein the multi-component composition further comprises water which is contained in the binder component (B) and/or, in the hardener component (C).

Surprisingly, the properties of the multi-component composition of the invention such as workability, open time, curing time and the mechanical properties and surface properties of floorings prepared therefrom have the same or at least similar properties compared to corresponding common compositions based on cement. The surface of floorings obtained with the inventive multi-component composition is satisfactory, no pinholes, craters or blisters are observed.

Further benefits are a significant reduction of dust by the multi-component composition of the invention. Therefore, measures such as addition of oil or cellulose fibers can be avoided and problems related to incorporation of such additives do not occur.

Since calcined paper sludge is based on a waste product which otherwise would have to be disposed, the invention is also a valuable contribution for preservation of resources and avoidance of CO₂ emission required for cement production. In this regard, the inventive multi-component composition represents green technology and contributes significantly to sustainability.

The inventive multi-component composition is suitable as screed or mortar and in particular for the manufacture of floorings or coatings.

### Detailed description of the invention

Compound names beginning with "poly" designate substances which formally contain, per molecule, two or more of the functional groups occurring in their names. The compound can be a monomeric, oligomeric or polymeric compound. For instance, a polyol is a compound having two or more hydroxy groups, a polyisocyanate is a compound having two or more isocyanate groups, and a polyamine is a compound having two or more amine groups.

Epoxy resins are compounds having two or more epoxide groups. Epoxy resins are preferably oligomeric or polymeric compounds.

The term "open time" is understood to mean the duration of processability when the components are mixed with each other. The end of the open time is usually associated with viscosity increase of the composition such that processing of the composition is no longer possible. The term workability encompasses many interrelated terms such as flowability, consistency, mobility, pumpability, plasticity, compactability, stability, and finishibility.

The epoxy equivalent weight (EEW) is well known to the skilled person and can be determined by ASTM D1652 (hydrogen bromide - acetic acid method).

The average molecular weight is understood to mean the number average molecular weight, as determined using conventional methods, preferably by gel permeation-chromatography (GPC) using polystyrene as standard, styrenedivinylbenzene gel with porosity of 100 Angstrom, 1000 Angstrom and 10000 Angstrom as the column and tetrahydrofuran as a solvent, at 35°C.

The composition of the invention is a multi-component composition, i.e. the composition comprises two or more individual components. The components are stored separately in order to avoid spontaneous reaction. The components may be assembled together as a package. For use the components are combined with each other. When the components are mixed together, hydration and/or curing reactions begin so that the composition is to be processed within the open time after mixing the components.

The multi-component composition preferably consists of two or three components. Optionally, one or more additional components may be included for specific purposes. The multi-component composition of the invention comprises a solid component (A) comprising calcined paper sludge. It is however preferred that the binder component (B) comprises one or more polyols or one or more epoxy resins as organic binder. In this case a third component is necessary, namely a hardener component (C) comprising a hardener for polyol or epoxy resin, respectively.

Systems comprising such organic binder and optionally a hardener suitable for cementitious applications are known to the skilled person and commercially available, for instance products of Sika Schweiz AG. An example for a commercially available combination of a binder component comprising polyol and an isocyanate hardener component is Sikafloor® PurCem. An example for a commercially available combination of a binder component comprising epoxy resin and an amine hardener component is Sikafloor® EpoCem. An example for a commercially available acrylic polymer latex dispersion which is not part of the present invention is Sikafloor® HyCem.

It is clear that the proportion of a certain ingredient in the mixture of the components depends on the content of this ingredient in the respective component and the mixture ratio of the components. In the following, ratios referring to ingredients in different components relate to suitable or correct proportions of each component according to operating instructions, i.e. to the mixing ratios to be used for mixing the components and, in use to the mixture of the components prepared.

### Solid component (A)

Component (A) is a solid component comprising calcined paper sludge and one or more aggregates. Component (A) is preferably a powder.

Solid Component (A) comprises calcined paper sludge. As explained above, paper sludge is a well-known waste product of paper production and in particular a waste product formed during deinking of recycled paper. The latter paper sludge is also called deinked sludge or deinked paper sludge. Paper sludge originating from the deinking process of recycled paper is preferred. The paper sludge is usually dried before it is calcined. The dried paper sludge is calcined to form calcined paper sludge. Calcination is a known process where the product is subjected to heat treatment. The calcination conditions may vary to a large extent depending on the composition of the paper sludge, the desired characteristics of the product and the duration of the heat treatment. By calcining the paper sludge the organic content is at least partially removed and the latent puzzolanic properties of the mineral content are activated. The calcined paper sludge is preferably carbon-free.

The calcined paper sludge may be prepared by subjecting the substantially dried paper sludge to temperatures e.g. in the range of from 350 to 900°C, preferably from 500 to 850°C and more preferably from 650 to 800°C. The heat treatment may last e.g. from 1 to 8 h, preferably 2 to 5 h. The heat treatment may be effected e.g. in a simple furnace or a fluidized bed combustion system.

Particularly preferred calcined paper sludge is obtained from the process described in WO 96/06057 by CDEM Minerals BV, Netherlands, where paper sludge is calcined at a temperature in the range of 720 to 850°C. A fluidized bed system is used for heat treatment.

Calcined paper sludge is commercially available, for instance from CDEM Minerals BV, Netherlands, under the trade name TopCrete® which is preferably used in the present invention. TopCrete® is a zero carbon material.

Calcined paper sludge is usually present in form of a powder. The color typically ranges from white to beige.

The precise composition of calcined paper sludge strongly depends on the chemistry of the paper residue inputs and the thermal conditions applied. Usually, the main ingredients of calcined paper sludge are calcium compounds such as CaO, Ca(OH)₂ and CaCO₃, and kaolinite or preferably metakaolinite. The calcined paper sludge may e.g. comprise, expressed as % oxides, SiO₂ (e.g. 10-40 wt.-%, preferably 15-35 wt.%), CaO (e.g. 20-90 wt.%, preferably 25-60 wt.% or 30-45 wt.%), Al₂O₃ (e.g. 5-30 wt.%, preferably 13-20 wt.%), MgO (e.g. 1-7 wt.%, preferably 2-4 wt.%), and other metal oxides (e.g. each less than 1 wt.%). The calcined paper sludge may also contain volatile material, for instance in the form of Ca(OH)₂ or CaCO₃ or organic material the content of which strongly depends on raw material used and the heat treatment conditions applied.

The content of the oxides increases when volatile material is lost by calcination or further calcination, respectively. The content of volatile material in the calcined paper sludge can be determined as loss on ignition (LOI), e.g. by heat treatment at 1000°C or higher until no further weight loss is observed. By such heat treatment, Ca(OH)₂ and CaCO₃ will transform into CaO with release of H₂O or CO₂, respectively, as volatile material.

Only for illustration, a chemical characterization of particular commercial calcined paper sludges is shown below. These examples shall not limit the scope of the invention. As outlined, the chemical composition may vary considerably depending on the kind of paper sludge used and the thermal conditions applied.

Chemical composition of an example calcined paper sludge from Holmen Paper Madrid Industrial (% by mass):

| | |
|---|---|
| CaO | 31.40 |
| SiO₂ | 30.20 |
| Al₂O₃ | 18.00 |
| Fe₂O₃ | 0.70 |
| SO₃ | 0.27 |
| MgO | 3.70 |
| K₂O | 0.32 |
| Na₂O | 0.21 |
| TiO₂ | 0.35 |
| P₂O₅ | 0.19 |
| Loss on ignition (LOI) | 14.53 |

Other examples of calcined paper sludges wherein the composition is indicated with respect to the compounds contained:

| Sample A | | Sample B | |
|---|---|---|---|
| CaCO₃ | 30 wt.% | CaCO₃ | 70 wt.% |
| CaO | 25 wt.% | CaO | 17 wt.% |
| Ca(OH)₂ | 2 wt.% | metakaolinite | 8 wt.% |
| metakaolinite | 36 wt.% | others | 6 wt.% |
| SiO₂ | 5 wt.% | | |
| others | 2 wt.% | | |

Solid component (A) further comprises one or more aggregates. Aggregates are chemically inert, solid particulate materials. Aggregates come in various shapes, sizes, and materials ranging from fine particles of sand to large, coarse rocks. Examples of suitable aggregates are sand, such as silica sand, gravel, and crushed stone, slag, calcined flint, lightweight aggregates such as clay, pumice, perlite, and vermiculite. Sand, in particular silica sand, is preferably used to reach the workability expected and to obtain a smooth surface.

The grain size of the aggregates may vary depending on the application, but is preferably rather small, e.g. not more than 6 mm, preferably not more than 4 mm. The aggregate may have, for instance, a grain size in the range of 0.05 to 4 mm, wherein sand, in particular silica sand, having a grain size in the range of 0.1 to 2 mm is particularly preferred. For instance, sand having a grain size ranging from 0.3 to 0.8 mm or from 0.1 to 0.5 mm can be advantageously used in the present invention. For applications such as covering or a heavy duty screed for trowelled finish aggregates such as sand having a size of e.g. 3 mm to 4 mm are suitable. The grain size range can be determined, e.g. by sieve analysis.

Optionally, the solid component may comprise cement and/or cement substitutes such as fly ash, slag, silica fume or rice husk.

If used, the cement may be any conventional cement type or a mixture of two or more conventional cement types, e.g., cements classified according to DIN EN 197-1: Portland cement (CEM I), Portland composite cement (CEM II), blast furnace cement (CEM III), pozzolanic cement (CEM IV) and composite cement (CEM V). Of course, cements produced in accordance with another standard, such as according to ASTM Standard or Indian Standard are also suitable.

Solid component (A) may optionally comprise one or more additives which are commonly used, if desired, and typically known to the persons skilled in the art of cementitous applications. Examples of suitable additives, which may be optionally used in component (A), are superplastizicer such as polycarboxylate ether (PCE); oil such as mineral oil, paraffin oil and organic oil, cellulose fibers, and inorganic or organic pigments. A further additive which may be contained in solid component (A) is lime such as hydrated lime, and burnt lime. Lime may be added, if cement is contained in solid component (A) and also if cement is not contained in solid component (A).

As mentioned, in the composition according to the present invention cement is substituted partially or completely by calcined paper sludge. The total content of calcined paper sludge and cement, if present, in component (A) is e.g. in the range of 10 to 40 wt.%, preferably in the range of 20 to 30 wt.%, based on the total weight of solid component (A). The content of one or more aggregates is e.g. in the range of 60 to 90 wt.%, preferably in the range of 70 to 80 wt.%, based on the total weight of solid component (A). Component (A) may comprise also one or more additives as mentioned above.

The solid component (A) may e.g. comprise 1 to 100 wt.-%, preferably 10 to 100 wt.-% calcined paper sludge, based on the total weight of cement, if present, and calcined paper sludge in component (A), wherein 100 wt.% means that component (A) is free of cement. The proportion of cement contained in solid component (A), if any, may vary depending on the binder component (B) used. In the case of polyols as binder component (B), component (A) can be free of cement, i.e. the cement can be partially or preferably completely replaced by calcined paper sludge. On the other hand, in the case of epoxy resins as binder component (B), it is preferred that component (A) comprises cement, i.e. in this case it is preferred that cement is only partially replaced by calcined paper sludge.

If the binder component (B) comprises an organic binder selected from one or more polyols, the solid component (A) may e.g. comprise from 10 to 100 wt.%, preferably from 50 to 100 wt.-%, more preferably from 80 to 100 wt.%, in particular about 100 wt.% calcined paper sludge, based on the total weight of cement, if present, and calcined paper sludge in component (A). Hence, the solid component (A) is preferably essentially free or free of cement, if one or more polyols are used as organic binder in binder component (B). The content of calcined paper sludge in the multi-component composition is e.g. in the range of 0.5 to 30 wt.% or 0.5 to 25 wt.%, preferably in the range of 1 to 20 wt.% and more preferably 5 to 20 wt.% or 10 to 20 wt.%, based on the total weight of component (A), component (B) and, if present, component (C).

### Binder component (B)

The binder component (B) comprises an organic binder selected from one or more polyols or one or more epoxy resins The organic binder is preferably selected from one or more polyols and one or more epoxy resins. In this case the multi-component composition also comprises a hardener component (C) including a hardener for polyol or epoxy resin, respectively. The organic binder is most preferably one or more polyols. It is preferred that the binder component (B) further comprises water. Optionally, one or more additives may be added to component (B).

Binder component (B) is preferably a liquid component. The binder component (B) may be viscous but is generally pourable.

Examples of suitable polyols are polyoxyalkylenepolyols, also referred to as "polyetherpolyols", polyesterpolyols, polycarbonatepolyols, poly(meth)acrylate polyols, polyhydrocarbon-polyols, polyhydroxy-functional acrylonitrile/butadiene copolymers and mixtures thereof, in particular diols thereof, and mixtures thereof.

Examples of polyetherpolyols are polyoxyethylenepolyols, polyoxypropylenepolyols and polyoxybutylenepolyols, in particular polyoxyethylenediols, polyoxypropylenediols, polyoxybutylenediols, polyoxyethylenetriols and polyoxypropylenetriols. Polyoxyalkylenediols or polyoxyalkylenetriols having a degree of unsaturation of less than 0.02 meq/g and having an average molecular weight in the range from 1000 to 30000 g/mol and polyoxyethylenediols, polyoxyethylenetriols, polyoxypropylenediols and polyoxypropylenetriols having an average molecular weight of from 400 to 8000 g/mol are suitable.

Further examples of polyetherpolyols are so-called ethylene oxide-terminated ("EO-endcapped", ethylene oxide-end-capped) polyoxypropylenepolyols, styrene-acrylonitrile-grafted polyetherpolyols, e.g. Lupranol® from Elastogran GmbH, Germany.

Particularly preferred polyols to be used in the present invention are polyhydroxy-functional fats and oils, for example natural fats and oils, such as castor oil, or polyols obtained by chemical modification of natural fats and oils, so-called oleochemical polyols. Castor oil is particularly preferred.

Examples of chemically modified natural fats and oils are polyols obtained from epoxypolyesters or epoxypolyethers obtained, for example, by epoxidation of unsaturated oils, by subsequent ring opening with carboxylic acids or alcohols, polyols obtained by hydroformylation and hydrogenation of unsaturated oils, or polyols which are obtained from natural fats and oils by degradation processes, such as alcoholysis or ozonolysis, and subsequent chemical linkage, for example by transesterification or dimerization, of the degradation products thus obtained or derivatives thereof. Suitable degradation products of natural fats and oils are in particular fatty acids and fatty alcohols and fatty acid esters, in particular the methyl esters (FAME), which can be derivatized, for example, by hydroformylation and hydrogenation to give hydroxy-fatty acid esters.

The polyols mentioned above usually have a relatively high molecular weight, for instance, an average molecular weight of from 250 to 30000 g/mol, in particular from 1000 to 30000 g/mol, and/or an average OH functionality in the range from 1.6 to 3.

Further examples of suitable polyols are low molecular weight di- or polyhydric alcohols, e.g., with a molecular weight of less than 250 g/mol. Examples thereof are 1,2-ethanediol, 1,2- and 1,3-propanediol, neopentylglycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols, such as xylitol, sorbitol or mannitol, sugars, such as sucrose, other alcohols having a higher functionality, low molecular weight alkoxylation products of the abovementioned di- and polyhydric alcohols, and mixtures thereof.

While said low molecular weight di- or polyhydric alcohols may be used as the polyol, the use of the polyols mentioned above having a high molecular weight is preferred. In a preferred embodiment at least one high molecular weight polyol and at least one low molecular weight di- or polyhydric alcohol are used in combination. As mentioned, a low molecular weight polyol is considered to have a molecular weight of less than 250 g/mol, whereas a high molecular weight polyol is considered to have an average molecular weight of 250 g/mol or more.

In a preferred embodiment binder component (B) comprises at least one low molecular weight polyol, based on the total weight of component (B), preferably in combination with at least one high molecular weight polyol.

Particularly preferred is a combination of one or more polyhydroxy-functional fats and oils, such natural fats and oils, or polyols obtained by chemical modification of natural fats and oils, in particular castor oil, and one, two or more low molecular weight di- or polyhydric alcohols. In such combinations, the one or more polyols having a high molecular weight are usually used in higher amounts than the at least one low molecular weight di- or polyhydric alcohol.

Examples of suitable epoxy resins are epoxy resins customary in epoxy chemistry. Epoxy resins can be prepared in a known manner, e.g. from the oxidation of the corresponding olefins or from the reaction of epichlorohydrin with the corresponding polyols, polyphenols or amines. Epoxy resins can be classified in liquid epoxy resins which have a glass transition temperature which is typically below 25° C, and solid epoxy resins having a glass transition temperature above 25° C. The epoxy resin may have an epoxy equivalent weight in the range of 65 to 500 g/eq. The epoxy resin is preferably a diepoxide.

In one embodiment, the epoxy resin may be an aromatic epoxy resin. Suitable examples are liquid epoxy resins of the following formula (I) 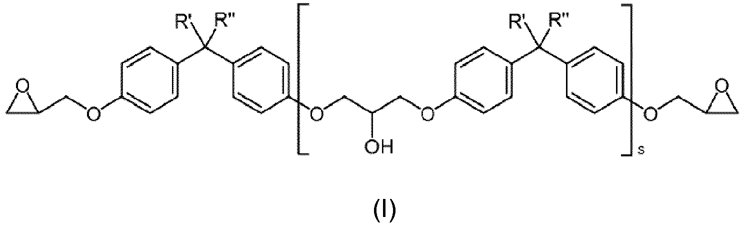 where R' and R" are each independently a hydrogen atom or a methyl group, and s has an average value of 0 to 1. Preference is given to those liquid resins in which index s has an average value of less than 0.2.

The liquid resins of the above formula are diglycidyl ethers of bisphenol A, bisphenol F and bisphenol A/F, where A represents acetone and F formaldehyde, which serve as reactants for preparation of these bisphenols.

Further suitable aromatic epoxy resins are the glycidylization products of
- dihydroxybenzene derivatives such as resorcinol, hydroquinone and catechol;
- further bisphenols or polyphenols such as bis(4-hydroxy-3-rnethylphenyl)-methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxy-phenyl)propane, 2,2-bis(4-hydroxy-3-tert.-butyl-phenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)-heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydrox-yphenyl)-1-phenyl-ethane, 1,4-bis[2-(4-hydroxyphenyl)-2-propylbenzene) (bisphenol P), 1,3-bis[2-(4-hydroxyphenyl)-2-propyl]benzene) (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl)ether, bis(4-hydroxyphenyl)sulfone;
- condensation products of phenols with formaldehyde, which are obtained under acidic conditions, such as phenol novolacs or cresol novolacs;
- aromatic amines, such as aniline, toluidine, 4-aminophenol, 4,4'-methylenediphenyldiamine (MDA). 4,4'-methylenediphenyldi(N-methyl)amine, 4,4'-[1,4-phenylenebis(1-methylethylidene)]bisaniline (bisaniline P), 4,4'-[1,3-phenylenebis(1-methyl-ethylidene)]bisaniline (bisaniline M).

In a further embodiment, the epoxy resin may be an aliphatic or cycloaliphatic polyepoxide, for example
- diglycidyl ether;
- a glycidyl ether of a saturated or unsaturated, branched or unbranched, cyclic or open-chain C₂ to C₃₀ diol, for example ethylene glycol, propylene glycol, butylene glycol, hexanediol, octanediol, a polypropylene glycol, dimethylolcyclohexane, neopentylglycol;
- a glycidyl ether of a tri- or tetrafunctional, saturated or unsaturated, branched or unbranched, cyclic or open-chain polyol such as castor oil, trimethylolpropane, trirnethylolethane, pentaerythritol, sorbitol or glycerol, and alkoxylated glycerol or alkoxylated trimethylolpropane;
- a hydrogenated bisphenol A, F or A/F liquid resin, or the glycidylization products of hydrogenated bisphenol A, F or A/F;
- a N-glycidyl derivative of amides or heterocyclic nitrogen bases, such as triglycidyl cyanurate and triglycidyl isocyanurate, and reaction products of epichlorohydrin and hydantoin.

Further examples of suitable epoxy resins are epoxy resins which have been prepared from the oxidation of olefins, for example from the oxidation of vinylcyclohexene, dicyclopentadiene, cyclohexadiene, cyclododecadiene, cyclododecatriene, isoprene, 1,5-hexadiene, butadiene, polybutadiene or divinylbenzene.

The epoxy resin is more preferably a diepoxide selected from the group consisting of a bisphenol A, bisphenol F and bisphenol A/F diglycidyl ether, preferably having an epoxy equivalent weight of 156 to 250 g/eq, which are e.g. commercially available as Araldite®GY 250, Araldite®PY 304, Araldite^{®} GY 282 (from Huntsman); D.E.R®331, D.E.R.®330 (from Dow); Epikote®828, Epikote® 862 (from Hexion); N,N-diglycidylaniline and a polyglycol diglycidyl ether, preferably having an epoxy equivalent weight of 170 to 340 g/eq, which are e.g. commercially available as D.E.R.® 732 and D.E. R.® 736 (from Dow).

Suitable examples of an epoxy resin are also a bisphenol A, F or A/F solid resin which is of similar composition to the liquid resins of the formula (I) mentioned above, where the index s has instead a value of 2 to 12. Further examples are one of the epoxy resins mentioned, which has been modified hydrophilic properties by the reaction with at least one polyoxyalkylenepolyol.

Preferred epoxy resins are bisphenol A, F or A/F solid or liquid resins, as available commercially, for example, from Dow, Huntsman and Hexion.

If the binder component (B) comprises an epoxy resin, component (B) may further comprise what is known as a reactive diluent. Suitable reactive diluents are mono- and polyepoxides, for example the glycidyl ethers of mono- or polyhydric phenols and aliphatic or cycloaliphatic alcohols, especially the polyglycidyl ethers of di- or polyols already mentioned as aliphatic or cycloaliphatic epoxy resins, and additionally especially phenyl glycidyl ether, cresyl glycidyl ether, p-n-butylphenyl glycidyl ether, p-tert.-butylphenyl glycidyl ether, nonylphenyl glycidyl ether, allyl glycidyl ether, butyl glycidyl ether, hexyl glycidyl ether, 2-ethylhexyl glycidyl ether, and glycidyl ethers of natural alcohols, for example C₈- to C₁₀-alkyl glycidyl ethers or C₁₂- to C₁₄-alkyl glycidyl ethers, commercially available as Erysis® GE-7 and Erysis® GE-8 (from CVC). The addition of a reactive diluent to the epoxy resin causes a reduction in the viscosity and - in the hardened state of the epoxy resin composition - a reduction in the glass transition temperature and in the mechanical values.

The epoxy resin is preferably contained as either what is known as an "emulsifiable epoxy resin" or an aqueous epoxy resin emulsion or dispersion. An epoxy resin dispersion preferably comprises, as well as water, at least one epoxy resin as specified above, and preferably additionally at least one emulsifier, especially a nonionic emulsifier, e.g. an alkyl or alkylaryl polyglycol ether, especially a polyalkoxylated alkylphenol such as alkylphenoxypoly-ethyleneoxy)ethanol, e.g. a polyadduct formed from nonylphenol and ethylene oxide, containing up to 30 mol of ethylene oxide per mole of nonylphenol.

Commercial epoxy resin dispersions are, e.g., Sika®Repair/Sikafloor® EpoCem® Module A (from Sika Schweiz AG), Araldite® PZ 323, Araldite® PZ 756/67, Araldite® PZ 3961 (from Huntsman), XZ 92598.00, XZ 92546.00, XZ 92533.00 (from Dow), Waterpoxy®1422, Waterpoxy®1455 (from Cognis), Beckopox®EP 384w, Beckopox® EP 385w, Beckopox® EP 386w, Beckopox® EP 2340w, Beckopox® VEP 2381w (from Cytec). Epoxy resin dispersions typically have a solids content in the range of 40-65% by weight.

An emulsifiable epoxy resin preferably contains at least one emulsifier as already mentioned above as a constituent of an epoxy resin dispersion. Commercial emulsifiable epoxy resins are, for example, Araldite® PY 340 and Araldite® PY 340-2 (from Huntsman), Beckopox® 122w and Beckopox® EP 147w (from Cytec).

Apart from the organic binder selected from one or more polyols, one or more epoxy resins the binder component (B) may contain further additives. Such additives are commonly used, if desired, and typically known to the persons skilled in the art. As mentioned, the binder component (B) preferably comprises water. Examples of optional further additives are plasticizers, pigments, adhesion promoters, such as silanes, e.g. epoxysilanes, (meth)acrylatosilanes and alkylsilanes, stabilizers against heat light and UV radiation, thixotropic agents, flow improving additives, flame retardants, surface active agents such as defoamers, wetting agents, flow control agents, deaerating agents, biocides and emulsifiers.

Preferably used optional additives for component (B) are one or more of plasticizers, such as benzoates, benzyl phthalates, e.g. Santicizer®160, and diisopropylbenzene, e.g. Benzoflex®9-88, pigments, such as inorganic and organic pigments, e.g. Bayferrox® and Heucosin®, defoamers, such as solvent silicon free and polyorganosiloxane, e.g. Tego®Airex and Efka®, and emulsifiers such as calcium hydroxide. Plasticizers are preferably used, if binder component (B) comprises one or more polyols.

### Hardener component (C)

If the binder component (B) comprises one or more polyols or one or more epoxy resins, the multi-component composition comprises a hardener component (C) which is an isocyanate hardener, if the binder component (B) comprises one or more polyols, or an amine hardener, if the binder component (B) comprises one or more epoxy resins.

Hardener component (C) is preferably a liquid component. The binder component (C) may be viscous but is generally pourable.

The isocyanate hardener is generally a polyisocyanate. Such polyisocyanates are commercially available and widely used as hardener. Examples for suitable polyisocyanates are hexamethylene diisocyanate (HDI), HDI trimers such as Desmodur®N 3600, toluene diisocyanate (TDI), isophorone diisocyanate (IPDI) such as Vestamat®T 1890, methylene diphenyl diisocyanate and derivatives of these polyisocyanates, wherein HDI and its derivatives, and methylene diphenyl diisocyanate and its derivatives are preferred, and methylene diphenyl diisocyanate is most preferred.

In the following, methylene diphenyl diisocyanate is abbreviated as MDI as usual. MDI is a useful compound, e.g. as a starting material for polyurethane production, and produced worldwide in millions of tons annually. A plurality of different product grades of MDI is available. "Methylene diphenyl diisocyanate" as this term is used in the present invention, include, depending on its grade, monomeric, and polymeric methylene diphenyl diisocyanate.

MDI is available in the form of three different isomers, namely 4,4'-methylene diphenyl diisocyanate (4,4'-MDI), 2,4'-methylene diphenyl diisocyanate (2,4'-MDI), and 2,2'-methylene diphenyl diisocyanate (2,2'-MDI). Commercially available MDI can be classified into monomeric MDI (also designated MMDI) and polymeric MDI (PMDI) also referred to as technical MDI. Polymeric MDI is the raw product of MDI synthesis containing MDI isomers and oligomeric species. Monomeric MDI is obtained from polymeric MDI by purification.

Monomeric MDI refers to "pure" MDI including products of a single MDI isomer or of isomer mixtures of two or three MDI isomers. The isomeric ratio can vary in wide ranges. For instance, 4,4'-MDI is a colorless to yellowish solid having a melting point of 39.5°C. Commercial monomeric MDI is often a mixture of 4,4'-MDI, 2,4'-MDI and typically very low levels of 2,2'-MDI.

Polymeric MDI includes oligomeric species in addition to MDI isomers. Thus, polymeric MDI contains a single MDI isomer or isomer mixtures of two or three MDI isomers, the balance being oligomeric species. Polymeric MDI tends to have isocyanate functionalities of higher than 2. The isomeric ratio as well as the amount of oligomeric species can vary in wide ranges in these products. For instance, polymeric MDI may typically contain about 30 to 80 wt.-% of MDI isomers, the balance being said oligomeric species. As in the case of monomeric MDI, the MDI isomers are often a mixture of 4,4'-MDI, 2,4'-MDI and very low levels of 2,2'-MDI. Polymeric MDI is typically a brown or dark amber liquid at room temperature (23°C).

The oligomeric species are oligomers having a NCO functionality of 3 or higher. The oligomeric species are a result of the synthesis process and can be represented by the following formula 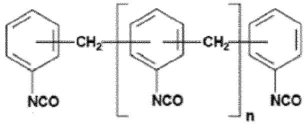 wherein n is 1 to 4 and higher. The amount of the homologues decreases with increasing chain length. The total content of homologues with n higher than 4 is generally not very high.

A wide variety of polymeric MDI grades is available with varying characteristics as to the number, type and content of isomers and oligomeric species, isomeric ratio, and weight distribution of the oligomeric homologues. These characteristics depend on type and conditions of synthesis and purification procedures. Moreover, the characteristics can be adjusted, e.g., by mixing different MDI grades according to the needs of the customer.

In the MDI used preferably at least 40 wt.-%, and more preferably at least 45 wt.-% of the MDI isomers are 4,4'-MDI. It is further preferred, that the MDI used comprises 2,4'-MDI and 4,4'-MDI in a ratio of 10:90 to 40:60.

The binder component (B) comprising a isocyanate hardener may optionally comprise one or more further additives such as solvents in relatively small amounts, e.g. up to 20 or up to 10 wt.-% of the additives all together, preferably up to 5 wt.-% and more preferably up to 2 wt.-% based on the total weight of the binder component (B). Suitable solvents include but are not limited to esters, ketones, hydrocarbons and chlorinated hydrocarbons. If MDI is used, it is generally preferred however, that the hardener component (C) comprising an isocyanate hardener consists of MDI, i.e. monomeric MDI and/or polymeric MDI. Since the MDI products are technical products, they may, of course, include low quantities of impurities.

The amine hardener which is used when the binder component (B) comprises one or more epoxy resins, is a compound having two or more amino groups. The amino groups may be primary or secondary amino groups. Amine hardeners for epoxy resins are known and commercially available.

The amine hardener may be a polyamine and is preferably a polyamine adduct. In particular, the amine hardener is preferably a polyamine-polyepoxide adduct, i.e. an adduct formed from polyamines and polyepoxides. Examples of the polyepoxides are the epoxy resins discussed above. The polyamine-polyepoxide adduct is preferably free of epoxy groups and contains secondary and/or primary amino groups.

Examples of suitable amine hardeners are e.g. described in EP-A1-2133381, EP-A1-0000605, EP-A1-0567831, EP-A1-0024915, the disclosure of which is incorporated by reference herein.

### Water

The multi-component composition comprises water. The water is contained in the binder component (B) or, if present, in the hardener component (C). It is preferred that the water is contained in binder component (B).

If the binder component (B) comprises one or more polyepoxides, water may be comprised in hardener component (C) comprising the amine hardener and/or in the binder component (B). It is usually preferred that the binder component (B) comprising one or more polyepoxides comprises water, whether the hardener component (C) comprising the amine hardener contains water or not. If the hardener component (C) comprises the isocyanate hardener it is usually not preferred that the hardener component (C) comprises water. Hence, the binder component (B) comprising one or more polyols preferably contains water.

When the components of the multi-component composition are mixed, the calcined paper sludge reacts with water. This reaction is similar to the reaction of water with cement, generally called hydration. Upon the reaction with the water, the calcined paper sludge is hardened to a solid material. When the organic binder is a polyol or an epoxy resin a further reaction occurs upon mixture where the organic binder is cured by the hardener component. The polymer latex dispersion usually does not react chemically but has rubber-like binding property. Thus, a hybrid solid material comprising an inorganic binder portion and an organic binder portion in which the aggregates are bound is formed.

### Method for the manufacture of a hybrid flooring or coating

The multi-component composition of the invention is suitable for the manufacture of a flooring or coating, wherein the method comprises
a) mixing binder component (B) and hardener component (C),
b) mixing solid component (A) with the mixture of binder component (B) and hardener component (C) obtained in step a), to obtain a mixed material,
c) applying the mixed material to a substrate,
d) optionally smoothing the applied mixed material, and
e) curing the applied mixed material, to obtain the flooring or coating.

Binder component (B) and hardener component (C) are mixed with each other. Both binder component (B) and hardener component (C) are preferably liquid or pourable components. The solid component (A) is added to this.

There is only little dust formation during addition of component (A) so that no problems occur in this regard. The mixed material is then processed in the usual way to produce a flooring or coating.

A typical layer thickness of a flooring or coating e.g. ranges from 1 mm to 9 mm. However, the thickness may vary depending on the type of floor intended so that a lower or higher thickness is also suitable. The application temperature is e.g. from about 8 to 40°C. The curing time may e.g. range from 15 hours to 72 hours depending on the temperature during hardening.

The multi-component composition is suitable as a grout. It is particular suitable as a flooring or coating composition for preparing coatings and especially floorings, in particular as a self-leveling flooring or coating composition.

The invention is further explained in the following experimental part which, however shall not be construed as limiting the scope of the invention. The proportions and percentage indicated are by weight, unless otherwise stated.

### Examples

### Solid component (A)

The ingredients indicated below are mixed to form component (A) containing calcined paper sludge and aggregates for Example 1 and cement and aggregates for Comparative Example 1.

### Component (C)

Component (B) is MDI (Suprasec® 2652 from Huntsman).

### Component (B)

The ingredients indicated below are mixed to form component (C) containing polyol and water for Example 1 and Comparative Example 1, respectively.

### Example 1 and Comparative Example 1

Components (A), (B) and (C) for Example 1 and Comparative Example 1 are mixed in a weight ratio to obtain a mixture of Example 1 and Comparative Example 1, respectively, as indicated below. The portion of each ingredient is given in % by weight, based on the total weight of the mixture.

| | | Ex. 1 | Comp.Ex.1 |
|---|---|---|---|
| | | amount [wt.%] | amount [wt.%] |
| Component (A) | hydrated lime | 0.1 | 3.5 |
| | silica sand | 44 | 48 |
| | calcined paper sludge | 16 | - |
| | white cement CEM I 52,5 | - | 18 |
| Component (B) | castor oil | 9.1 | 8.5 |
| | plasticizer | 4 | 2 |
| | defoamer | 0.6 | 0.5 |
| | pigment | 1.2 | 1.5 |
| | water | 5 | 4 |
| Component (C) | MDI | 20 | 14 |
| | total | 100 | 100 |

The mixed material according to Example 1 and Comparative Example 1 were applied to a substrate in order to prepare a flooring and tested with respect to handling and properties. The following methods have been used. The results are summarized in the table below.

### Application finish / pinholes

The finished flooring is inspected visually for appearance and pinholes.

### Blistering

The separate components including a primed (SR-161) wooden board of approx. 0,30 x 0,26 m with a wooden frame of 5 mm height were stored at 35°C for 16 - 24 h. 1 kg of material was mixed for 3 min at 900 rpm and the material applied on the primed board to obtain a layer thickness of 4 mm. The surface was spike rolled and the board was placed back into the 35°C oven. After curing, the surface was evaluated for cracks and blisters. Pinholes were not taken into account.

### Flowability/Consistency

The test was carried out at 23°C/50% using the cone described in DIN EN 1015-3, but without tamping the material. 1 kg of material (at 23°C/50%) was mixed for 3 min at 900 rpm. The cone was set on the glass sheet, filled to the rim, lifted and the diameter of the resulting circle was determined after 10 min. The test was also carried out at 35°C and at 12°C.

### Pot life or working life

Two methods were carried out at 23°C/50%, depending on the amount of material available. In preliminary tests we had determined that both methods resulted in the same time (+/- 2 min) for the working life. The materials were kept at the above mentioned temperature prior to mixing.

Material was applied in 6 mm thickness in a plastic lid of 25 cm diameter and after a certain time the diameter was scratched with a pallet knife, the time before the mark does not self heal anymore is regarded as the end of the working life. To carry out this test, 1 kg of material was mixed for 3 min at 900 rpm. The test was repeated at a temperature of 35°C.

### Impact resistance

The test follows DIN EN ISO 6272. An impact resistance tester of Fa. Erichsen, model 304, is used. The mixture to be studied is applied to the surface of the concrete test specimen of 300mm x 300mm x 40mm. The test specimens are stored and tested at (23±2)°C and (50±5)% relative humidity. Attach the test specimen to the impact test device. Lift the weight (1000g) to a height at which no damage is expected. Release the weight so that it drops onto the test specimen. Inspect the coating with the magnifying glass with 10 fold magnification for changes, cracking, and separation. If there are no cracks carry out the test again at new positions with increasing heights of fall till cracks can be found. Increase the height of fall each time by 25mm or multiples thereof. If necessary, a heavier weight (2000g) is used. If cracks can be found proceed as follows: Carry out the test at 5 different points with the appropriate weight with the following heights: from the height at which the first cracks were found, 25mm higher and 25mm lower. The coating passes the test if there are 4 positions with no cracks and no separating at least. The weight/height-of-fall combination is taken at which the results change from passed to not passed. The impact resistance in N/m (or Joule) results from the weight in N and the height of fall in meters.

### Shrinkage

Using 4 x 4 x 16 cm prisms the shrinkage of the material was determined using DIN 52450 gauge type C. The material was filled into moulds and taken out after 24 h. The length of the prism was then determined and compared to the length determined after 1d, 7d 28 d after demoulding. The difference indicates the shrinkage. The test is carried out on three specimens and the shrinkage calculated as mm/m.

### Compressive strength / Flexural strength

Samples 4 x 4 x 16 cm were prepared by filling the moulds with the respective materials, the samples were taken out of the moulds after 1d and the test carried out according to EN 13892-2 (DIN EN 196-1) after 1d, 7d and 28d of curing at 23°C/50%. The increase of load for the flexural strength is 50 ± 10 N/s and for the compressive strength it is 2400 ± 200 N/s. The result for the flexural strength is the mean out of three and for the compressive strength, the mean out of six.

### Shore D hardness

Samples of 4 mm (Policrete, Flowfresh, Ucrete) resp. 4.5 mm (SR-21N Purcems) thickness were cast and cured at the respective temperatures (8°C, 23°C/50% and 35°C). Shore D was determined with an automatic gauge at 3s and 15s. Three measurements were taken at different times over 28d and the mean is stated in the table. The results are only suitable for comparative evaluation, as the samples contain sand and thus the hardness is not to be determined with the Shore method.

| Product | Comp.Ex. 1 | Ex. 1 |
|---|---|---|
| Application finish | matt | medium gloss (60°=25) |

| Application T | | |
|---|---|---|
| Lower limit | 8°C | 12°C |
| Upper limit | 35°C | 35°C |
| Blistering | no | no |
| Pinholes | no | yes |

| Flowability | | |
|---|---|---|
| 23°C | 320mm-340mm | 305mm-325mm |
| 35°C | 320mm-345mm | 305mm-330mm |
| 12°C | 275mm-300mm | 250mm-275mm |

| Pot life | | |
|---|---|---|
| 23°C | 26min | 26min |
| 35°C | 24min | 24min |
| Impact resistance | 10N/m (open, cracks) | 18N/m (cracks, but no openings) |

| Shrinkage @ 23°C | | |
|---|---|---|
| 1d | -0.5mm/m | -0.008mm/m |
| 7d | -0.9mm/m | -0.215mm/m |
| 28d | -1.06mm/m | n.d. |

| Compressive strength @ 23°C | | |
|---|---|---|
| 1d | 31.3N/mm² | 47.3N/mm² |
| 7d | 47.8N/mm² | 61.8N/mm² |
| 28d | 52.1 N/mm² | 70.0N/mm² |

| Flexural strength @ 23°C | | |
|---|---|---|
| 1d | 10N/mm² | 16.6N/mm² |
| 7d | 14.6N/mm² | 19.2N/mm² |
| 28d | 16.4N/mm² | 19.8N/mm² |

| Shore D hardness @23°C | | |
|---|---|---|
| 1d | 70 | 74 |
| 2d | 76 | 79 |
| 3d | 82 | 81 |

| Shore D hardness@8°C | | |
|---|---|---|
| 1d | 10 | 21 |
| 2d | 60 | 53 |
| 3d | 68 | 78 |

As can be seen from the results, the composition comprising calcined paper sludge has similar, and in some cases even improved, properties compared to the comparative composition using cement.

### Example 2

The following components (A), (B) and (C) were mixed to obtain a mixture for preparing a flooring. The properties of the floorings are sufficient and similar to corresponding common mixtures where only cement is used instead of a combination of calcined paper sludge and cement. The proportions are given in % by weight, based on the mixture.

| Comp. | Ingredients | amount [wt.%] |
|---|---|---|
| (A) | calcined paper sludge / cement / aggregates / hydrated lime | 82.5 |
| (B) | epoxy resin / water | 5 |
| (C) | Amine / water | 12.5 |

### Example 3

The following components (A) and (B) were mixed to obtain a mixture for preparing a flooring. The properties of the floorings are sufficient and similar to corresponding common mixtures where only cement is used instead of a combination of calcined paper sludge and cement. The proportions are given in % by weight, based on the mixture.

| Comp. | Ingredients | amount [wt.%] |
|---|---|---|
| (A) | calcined paper sludge / cement / aggregates / hydrated lime | 75 |
| (B) | acrylate latex dispersion in water | 25 |

## Claims

1. Multi-component composition comprising
A) a solid component (A) comprising calcined paper sludge and one or more aggregates, and
B) a binder component (B) comprising an organic binder selected from one or more polyols and one or more epoxy resins and,
C) a hardener component (C) comprising an isocyanate hardener for polyol or an amine hardener for epoxy resin,
wherein the multi-component composition further comprises water which is contained in the binder component (B) and/or in the hardener component (C).

2. Multi-component composition according to claim 1, wherein solid component (A) is free of cement or comprises cement, and the content of calcined paper sludge is in the range of 1 to 100 wt.%, preferably 10 to 100 wt.%, based on the total weight of calcined paper sludge and cement, if present, contained in solid component (A).

3. Multi-component composition according to claim 2, wherein,
if the organic binder is selected from one or more epoxy resins, the content of calcined paper sludge is in the range of 1 to 50 wt.%, preferably 10 to 50 wt.%, based on the total weight of calcined paper sludge and cement contained in solid component (A),
or if the organic binder is selected from one or more polyols, solid component (A) is essentially free of cement.

4. Multi-component composition according to any of claims 1 to 3, wherein the content of calcined paper sludge is in the range of 0.5 to 25 wt.%, preferably 1 to 20 wt.%, based on the total weight of solid component (A), binder component (B) and hardener component (C).

5. Multi-component composition according to any of claims 1 to 4, wherein the binder component (B) comprises one or more polyols and water, and the hardener component (C) comprises a polyisocyanate, preferably methylene diphenyl diisocyanate, as the isocyanate hardener.

6. Multi-component composition according to claim 5, wherein binder component (B) comprises one or more polyols, and at least one polyol is a polyhydroxy-functional fat or oil or a polyol obtained by chemical modification of a natural fat or oil, wherein the polyol is preferably castor oil.

7. Multi-component composition according to any of claims 1 to 4, wherein the binder component (B) comprises one or more epoxy resins and optionally water, and the hardener component (C) comprises a polyamine, preferably an adduct from polyamine and polyepoxide as amine hardener.

8. Multi-component composition according to any of claims 1 to 7, wherein the multi-component composition is a flooring composition, a coating composition or a grout composition.

9. Method for the manufacture of a flooring or coating with a multi-component composition according to any of claims 1 to 8, wherein the method comprises
a) mixing binder component (B) and hardener component (C),
b) mixing solid component (A) with the mixture of binder component (B) and hardener component (C) obtained in step a), to obtain a mixed material,
c) applying the mixed material to a substrate,
d) optionally smoothing the applied mixed material, and
e) curing the applied mixed material, to obtain the flooring or coating.

10. Flooring or coating, obtainable by the method of claim 9.

11. Use of a multi-component composition according to any of claims 1 to 7 as a flooring composition, a coating composition or a grout composition.

## Patentansprüche

1. Mehrkomponentige Zusammensetzung, umfassend
A) eine feste Komponente (A), umfassend calcinierten Papierschlamm und einen oder mehrere Zuschlagstoffe, und
B) eine Bindemittelkomponente (B), umfassend ein organisches Bindemittel, das aus einem oder mehreren Polyolen und einem oder mehreren Epoxidharzen ausgewählt ist, und
C) eine Härterkomponente (C), umfassend einen Isocyanat-Härter für Polyol oder einen Amin-Härter für Epoxidharz,
wobei die mehrkomponentige Zusammensetzung ferner Wasser umfasst, das in der Bindemittelkomponente (B) und/oder in der Härterkomponente (C) enthalten ist.

2. Mehrkomponentige Zusammensetzung nach Anspruch 1, wobei die feste Komponente (A) zementfrei ist oder Zement umfasst und der Gehalt an calciniertem Papierschlamm im Bereich von 1 bis 100 Gew.-%, vorzugsweise 10 bis 100 Gew.-%, bezogen auf das Gesamtgewicht von calciniertem Papierschlamm und Zement, sofern vorhanden, in der festen Komponente (A), liegt.

3. Mehrkomponentige Zusammensetzung nach Anspruch 2, wobei dann, wenn das organische Bindemittel aus einem oder mehreren Epoxidharzen ausgewählt ist, der Gehalt an calciniertem Papier schon im Bereich von 1 bis 50 Gew.-%, vorzugsweise 10 bis 50 Gew.-%, bezogen auf das Gesamtgewicht von calciniertem Papierschlamm und Zement in der festen Komponente (A) liegt
oder dann, wenn das organische Bindemittel aus einem oder mehreren Polyolen ausgewählt ist, die feste Komponente (A) im Wesentlichen zementfrei ist.

4. Mehrkomponentige Zusammensetzung nach einem der Ansprüche 1 bis 3, wobei der Gehalt an calciniertem Papierschlamm im Bereich von 0,5 bis 25 Gew.-%, vorzugsweise 1 bis 20 Gew.-%, bezogen auf das Gesamtgewicht von fester Komponente (A), Bindemittelkomponente (B) und Härterkomponente (C), liegt.

5. Mehrkomponentige Zusammensetzung nach einem der Ansprüche 1 bis 4, wobei die Bindemittelkomponente (B) ein oder mehrere Polyole und Wasser umfasst und die Härterkomponente (C) als Isocyanat-Härter ein Polyisocyanat, vorzugsweise Methylendiphenyldiisocyanat, umfasst.

6. Mehrkomponentige Zusammensetzung nach Anspruch 5, wobei die Bindemittelkomponente (B) ein oder mehrere Polyole umfasst und es sich bei mindestens einem Polyol um ein polyhydroxylfunktionelles Fett oder Öl oder ein durch chemische Modifizierung eines natürlichen Fetts oder Öls gehaltenes Polyol handelt, wobei es sich bei dem Polyol vorzugsweise um Ricinusöl handelt.

7. Mehrkomponentige Zusammensetzung nach einem der Ansprüche 1 bis 4, wobei die Bindemittelkomponente (B) ein oder mehrere Epoxidharze und gegebenenfalls Wasser umfasst und die Härterkomponente (C) als Amin-Härter ein Polyamin, vorzugsweise ein Addukt aus Polyamin und Polyepoxid, umfasst.

8. Mehrkomponentige Zusammensetzung nach einem der Ansprüche 1 bis 7, wobei es sich bei der mehrkomponentigen Zusammensetzung um eine Bodenbelagszusammensetzung, eine Überzugszusammensetzung oder eine Mörtelzusammensetzung handelt.

9. Verfahren zur Herstellung eines Bodenbelags oder Überzugs mit einer mehrkomponentigen Zusammensetzung nach einem der Ansprüche 1 bis 8, wobei das Verfahren Folgendes umfasst:
a) Mischen der Bindemittelkomponente (B) und der Härterkomponente (C),
b) Mischen der festen Komponente (A) mit der in Schritt a) erhaltenen Mischung der Bindemittelkomponente (B) und der Härterkomponente (C) zum Erhalt eines gemischten Materials,
c) Aufbringen des gemischten Materials auf ein Substrat,
d) gegebenenfalls Glätten des aufgebrachten gemischten Materials und
e) Härten des aufgebrachten gemischten Materials zum Erhalt des Bodenbelags oder Überzugs.

10. Bodenbelag oder Überzug, der durch das Verfahren nach Anspruch 9 erhältlich ist.

11. Verwendung einer mehrkomponentigen Zusammensetzung nach einem der Ansprüche 1 bis 7 als Bodenbelagszusammensetzung, Überzugszusammensetzung oder Mörtelzusammensetzung.

## Revendications

1. Composition à plusieurs constituants, comprenant :
A) un constituant solide (A) comprenant une boue de papier calciné et un ou plusieurs agrégats, et
B) un constituant de liage (B) comprenant un liant organique sélectionné parmi un ou plusieurs polyols et une ou plusieurs résines époxydes
et
C) un constituant durcisseur (C) comprenant un durcisseur isocyanate pour le polyol ou un durcisseur amine pour la résine époxyde,
la composition à plusieurs constituants comprenant en outre de l'eau qui est présente dans le constituant de liage (B) et/ou dans le constituant durcisseur (C).

2. Composition à plusieurs constituants selon la revendication 1, dans laquelle le constituant solide (A) est sans ciment ou comprend du ciment, et la teneur en boue de papier calciné est de 1 à 100 % en poids, préférablement de 10 à 100 % en poids, relativement au poids total de la boue de papier calciné et du ciment, le cas échéant, qui sont présents dans le constituant solide (A).

3. Composition à plusieurs constituants selon la revendication 2, dans laquelle, si le liant organique est sélectionné parmi une ou plusieurs résines époxydes, la teneur en boue de papier calciné est de 1 à 50 % en poids, préférablement de 10 à 50 % en poids, relativement au poids total de la boue de papier calciné et du ciment qui sont présents dans le constituant solide (A),
ou, si le liant organique est sélectionné parmi un ou plusieurs polyols, le constituant solide (A) est essentiellement sans ciment.

4. Composition à plusieurs constituants selon l'une quelconque des revendications 1 à 3, dans laquelle la teneur en boue de papier calciné est de 0,5 à 25 % en poids, préférablement de 1 à 20 % en poids, relativement au poids total du constituant solide (A), du constituant de liage (B) et du constituant durcisseur (C).

5. Composition à plusieurs constituants selon l'une quelconque des revendications 1 à 4, dans laquelle le constituant de liage (B) comprend un ou plusieurs polyols et de l'eau, et le constituant durcisseur (C) comprend un polyisocyanate, préférablement le diisocyanate de méthylènediphényle, comme durcisseur isocyanate.

6. Composition à plusieurs constituants selon la revendication 5, dans laquelle le constituant de liage (B) comprend un ou plusieurs polyols, et au moins un polyol est une graisse ou une huile à fonctionnalité polyhydroxy ou un polyol obtenu par modification chimique d'une graisse ou d'une huile naturelle, le polyol étant préférablement de l'huile de ricin.

7. Composition à plusieurs constituants selon l'une quelconque des revendications 1 à 4, dans laquelle le constituant de liage (B) comprend une ou plusieurs résines époxydes et optionnellement de l'eau, et le constituant durcisseur (C) comprend une polyamine, préférablement un composé d'addition d'une polyamine et d'un polyépoxyde comme durcisseur amine.

8. Composition à plusieurs constituants selon l'une quelconque des revendications 1 à 7, la composition à plusieurs constituants étant une composition de revêtement de sol, une composition de revêtement, ou une composition de coulis.

9. Procédé de fabrication d'un revêtement de sol ou d'un revêtement avec une composition à plusieurs constituants selon l'une quelconque des revendications 1 à 8, le procédé comprenant :
a) le mélange d'un constituant de liage (B) et d'un constituant durcisseur (C),
b) le mélange d'un constituant solide (A) avec le mélange de constituant de liage (B) et de constituant durcisseur (C) obtenu à l'étape a), pour obtenir un matériau mélangé,
c) l'application du matériau mélangé sur un substrat,
d) optionnellement le lissage du matériau mélangé qui a été appliqué, et
e) le durcissement du matériau mélangé qui a été appliqué, pour obtenir le revêtement de sol ou le revêtement.

10. Revêtement de sol ou revêtement, pouvant être obtenu par le procédé selon la revendication 9.

11. Utilisation d'une composition à plusieurs constituants selon l'une quelconque des revendications 1 à 7 comme composition de revêtement de sol, composition de revêtement, ou composition de coulis.
